# EUROPÄISCHE PATENTSCHRIFT

(11) **EP 4 146 463 B1**
(45) Veröffentlichungstag und Bekanntmachung des Hinweises auf die Patenterteilung: **10.09.2025**
(21) Anmeldenummer: 20820386.9
(22) Anmeldetag: 04.12.2020
(51) Int. Cl.: B29D 30/00, G01M 1/32, G01M 17/02

(54) **VERFAHREN ZUR VERBESSERUNG EINES REIFENSYSTEMS**
METHOD FOR IMPROVING A TYRE SYSTEM
PROCÉDÉ D'AMÉLIORATION D'UN SYSTÈME DE PNEU

(30) Priorität: 07.05.2020 DE 102020205737
(43) Veröffentlichungstag der Anmeldung: 15.03.2023
(73) Patentinhaber: Continental Reifen Deutschland GmbH, 30175 Hannover (DE)
(72) Erfinder: BUCHHOLZ, Arne, 30165 Hannover (DE); FAUSTINO, Sónia, 30165 Hannover (DE)
(74) Vertreter: Continental Corporation
(86) Internationale Anmeldenummer: PCT/EP2020/084647
(87) Internationale Veröffentlichungsnummer: WO 2021/223897

(56) Entgegenhaltungen:
- WO-A1-2012/074527
- DE-A1- 102013 225 891
- KR-B1- 100 715 864

## Beschreibung

Die Erfindung betrifft ein Verfahren zur Verbesserung eines Reifensystems und ein Reifensystem.

Die Erfindung geht aus von einem Verfahren zur Verbesserung eines Reifensystems, aufweisend die folgenden Schritte:
- Bereitstellen eines Reifens;
- Bereitstellen einer elektromagnetischen Sende- und Empfangsvorrichtung;
- Bereitstellen einer Vorrichtung zum Ermitteln eines Grades einer Gleichförmigkeit eines Reifens;
- Bestimmen eines Anordnungsbereichs an oder in dem Reifen;
- Anordnen der elektromagnetischen Sende- und Empfangsvorrichtung an oder in dem Anordnungsbereich des Reifens;
- Ermitteln des Grades der Gleichförmigkeit des Reifens;
- Erzeugen einer Information über den Grad der Gleichförmigkeit.

Die Information wird vorzugsweise mittels der Vorrichtung erzeugt.

Bei der Gleichförmigkeit kann es sich beispielsweise um eine geometrische Gleichförmigkeit und/oder um eine auf eine Massenverteilung innerhalb des Reifens bezogene Gleichförmigkeit handeln. Es kann sich darüber hinaus um eine auf Kraftentwicklungen innerhalb des Reifens bezogene Gleichförmigkeit handeln. Es kann sich insgesamt um statische oder dynamische Gleichförmigkeiten handeln.

Aus dem Stand der Technik sind Verfahren zur Verbesserung eines Reifensystems bekannt. Die Reifensysteme weisen insbesondere einen Reifen und eine elektromagnetische Sende- und Empfangsvorrichtung auf. Dabei ist es aus dem Stand der Technik auch bekannt, elektromagnetische Sende- und Empfangsvorrichtungen an oder in einem Reifen anzubringen.

Der Stand der Technik wird beispielsweise gebildet durch die KR 100715864 B1, die DE 10 2013 225 891 A1 und die WO 2012/074527 A1.

Ferner ist es aus dem Stand der Technik auch bekannt, einen Grad einer Gleichförmigkeit des Reifens zu bestimmen. Anhand des Grades der Gleichförmigkeit des Reifens kann der Reifen technisch, beispielsweise hinsichtlich seines Fahrverhaltens, bewertet werden. Bei der Bestimmung des Grades der Gleichförmigkeit kann insbesondere bestimmt werden, inwieweit ein Reifen, entsprechend seiner annähernden Torusform, von einer idealen Rotationssymmetrie der Torusform abweicht. Anhand des Grades der Gleichförmigkeit können beispielsweise Unwuchten des Reifens erkannt und bestimmt werden. Die Information über den Grad der Gleichförmigkeit des Reifens kann vorzugsweise zur Verbesserung des Reifens oder des Reifensystems verwendet werden.

Bei den aus dem Stand der Technik bekannten Verfahren zur Verbesserung eines Reifensystems wird die Information über den Grad der Gleichförmigkeit des Reifens beispielsweise mittels einer Markierung auf dem Reifen gespeichert, wobei die Markierung an einer Oberfläche des Reifens angebracht wird. Diese Markierung könnte bei einem Verarbeitungsprozess des Reifens abgelöst oder beschädigt werden. Die Information über den Grad der Gleichförmigkeit des Reifens könnte damit verloren gehen.

Der Erfindung liegt daher die Aufgabe zu Grunde, ein verbessertes Verfahren zur Verbesserung eines Reifensystems bereitzustellen, mittels dem die Information über den Referenzpunkt zuverlässig gespeichert werden kann.

Das Signal wird vorzugsweise mittels der Vorrichtung erzeugt und übertragen.

Durch den erfindungsgemäßen Umstand, wonach das Verfahren diese weiteren Schritte aufweist, wird die Information über den Grad der Gleichförmigkeit maschinell oder elektronisch auslesbar und dauerhaft gespeichert. Die Wahrscheinlichkeit eines Verlustes der Information, beispielsweise durch den Verlust eines die Information tragenden Aufklebers, wird dadurch verringert.

Somit wird ein verbessertes Verfahren zur Verbesserung eines Reifensystems bereitgestellt.

Bei einer elektromagnetischen Sende- und Empfangsvorrichtung handelt es sich beispielsweise um eine RFID-Vorrichtung. RFID bedeutet Radio Frequency Identification und diese bedeutet Identifizierung mittels elektromagnetischer Wellen. Elektromagnetisch bedeutet in diesem Zusammenhang elektromagnetisch wirkend, also, dass die elektromagnetische Sende- und Empfangsvorrichtung eingerichtet ist, Signale mittels elektromagnetischer Wellen zu senden und zu empfangen.

Die Erfindung betrifft ferner ein Reifensystem, aufweisend einen Reifen und eine elektromagnetische Sende- und Empfangsvorrichtung und insbesondere eine Datenbank. Das Reifensystem ist zur Durchführung eines erfindungsgemäßen Verfahrens vorgesehen.

Bei dem Reifen kann es sich beispielsweise um einen PKW-Reifen, um einen LKW-Reifen oder um einen Zweirad-Reifen handeln.

Gelöst wird die gestellte Aufgabe durch die Verfahrensschritte des Anspruchs 1.

Weitere vorteilhafte Ausführungsformen der vorliegenden Erfindung sind Gegenstand der Unteransprüche.

Gemäß einer vorzugsweisen Ausgestaltungsform der vorliegenden Erfindung handelt es sich bei der Empfängervorrichtung um eine Datenbank oder um die elektromagnetische Sende- und Empfangsvorrichtung.

Gemäß einer nächsten vorzugsweisen Ausgestaltungsform der vorliegenden Erfindung wird eine Reifenidentifikationsinformation in dem Speicherelement der Empfängervorrichtung gespeichert, wobei andere in dem Speicherelement gespeicherte Informationen anhand der Reifenidentifikationsinformation dem Reifen eineindeutig zugeordnet werden können.

Durch den erfindungsgemäßen Umstand, wonach eine Reifenidentifikationsinformation in dem Speicherelement der Empfängervorrichtung gespeichert wird, wobei andere in dem Speicherelement gespeicherte Informationen anhand der Reifenidentifikationsinformation dem Reifen eineindeutig zugeordnet werden können, wird beispielsweise die Wahrscheinlichkeit einer fehlerhaften Zuordnung der Information über den Grad der Gleichförmigkeit zu einem nicht zugehörigen Reifen verringert.

Gemäß einer nächsten vorzugsweisen Ausgestaltungsform des erfindungsgemäßen Verfahrens wird die Reifenidentifikationsinformation in dem Speicherelement der elektromagnetischen Sende- und Empfangsvorrichtung mit der Information über die Gleichförmigkeit verknüpft gespeichert und/oder die Reifenidentifikationsinformation wird in dem Speicherelement der Datenbank mit der Information über die Gleichförmigkeit verknüpft gespeichert.

Beispielswiese kann die Reifenidentifikationsinformation über den Reifen, die in der elektromagnetischen Sende- und Empfangsvorrichtung gespeichert ist, der Information über die Gleichförmigkeit zugeordnet werden. Beide Informationen können in der elektromagnetischen Sende- und Empfangsvorrichtung miteinander verknüpft gespeichert sein beziehungsweise in der Datenbank miteinander verknüpft gespeichert werden.

Gemäß der vorliegenden Erfindung weist das Verfahren die weiteren Schritte auf:
- Ermitteln mindestens einer Signifikanzstelle der Gleichförmigkeit des Reifens anhand des Grades der Gleichförmigkeit;
- Erfassen einer räumlichen Position der mindestens einen Signifikanzstelle an oder in dem Reifen;
- Speichern einer Information über die räumliche Position der mindestens einen Signifikanzstelle in dem Speicherelement.

Die mindestens eine Signifikanzstelle wird vorzugsweise mittels der Vorrichtung ermittelt. Die räumliche Position der mindestens einen Signifikanzstelle wird vorzugsweise mittels der Vorrichtung erfasst.

Bei der mindestens einen Signifikanzstelle handelt es sich um eine Stelle, bei der eine Ungleichförmigkeit vorliegt. Dabei handelt es sich beispielsweise um eine Stelle des Reifens, an der der Reifen ein totales maximales Gewicht aufweist oder es handelt sich bei der Signifikanzstelle um den Schwerpunkt des Reifens, ausgehend von der Rotationsachse des Reifens. Oder es handelt sich dabei um eine Stelle, an der eine erste oder höhere Harmonische einer Ungleichförmigkeitsmessung an dem Reifen vorliegt.

Gemäß einer nächsten vorzugsweisen Ausgestaltungsform der vorliegenden Erfindung handelt es sich bei der räumlichen Information über die Signifikanzstelle um eine räumlich auf den Anordnungsbereich der elektromagnetischen Sende- und Empfangsvorrichtung bezogene Position.

Gemäß einer nächsten vorzugsweisen Ausgestaltungsform der vorliegenden Erfindung handelt es sich bei der räumlichen Information über die Signifikanzstelle um eine räumlich auf einen Informationsbereich an dem Reifen bezogene Position.

Bei dem Informationsbereich handelt es sich um eine insbesondere optisch lesbare Oberflächenstruktur des Reifens. Insbesondere handelt es sich bei dem Informationsbereich um eine DOT-Markierung des Reifens.

Gemäß einer nächsten vorzugsweisen Ausgestaltungsform der vorliegenden Erfindung werden zu einem Bestimmen des Anordnungsbereichs folgende Schritte durchgeführt:
- Bereitstellen einer Auslesevorrichtung, wobei die Auslesevorrichtung zu einem Ermitteln eines Sendevermögens der elektromagnetischen Sende- und Empfangsvorrichtung vorgesehen ist;
- Ermitteln eines Sendevermögens der elektromagnetischen Sende- und Empfangsvorrichtung mittels Auslesevorrichtung;
- Bestimmen des Anordnungsbereichs in Abhängigkeit eines charakteristischen Sendevermögens.

Bei dem Sendevermögen handelt es sich beispielsweise um das Vermögen, ein elektromagnetisches Signal auszusenden. Dabei handelt es sich bei dem ausgesendeten elektromagnetischen Signal beispielsweise um ein Antwortsignal, dass aufgrund eines ersten empfangenen Signals, dass von der Auslesevorrichtung zu der elektromagnetischen Sende- und Empfangsvorrichtung gesendet worden ist, ausgesendet wird.

Das ausgesendete Signal kann beispielsweise dadurch geprägt sein, dass es eine maximale Signalstärke oder eine charakteristische Modulation aufweist.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines erfindungsgemäßen Reifensystems gemäß einer ersten Ausführunsgform;
Fig. 2: Eine schematische Darstellung eines erfindungsgemäßen Reifensystems gemäß einer zweiten Ausführunsgform;
Fig. 3: Eine schematische Darstellung eines erfindungsgemäßen Reifensystems gemäß einer dritten Ausführunsgform.

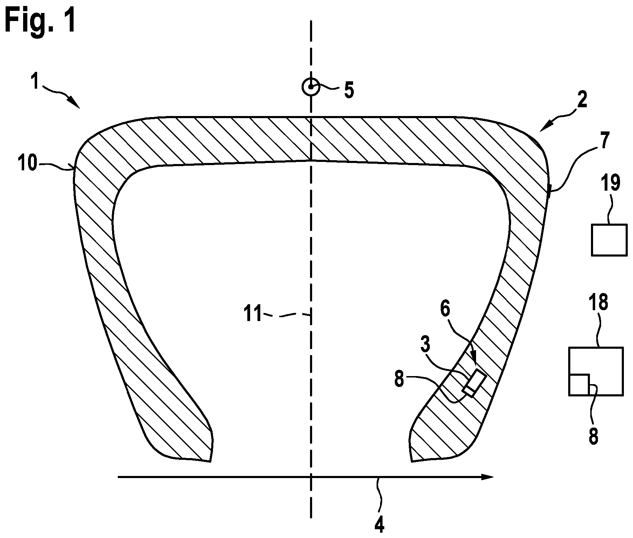

In der Figur 1 ist ein erfindungsgemäßes Reifensystem 1 schematisch dargestellt. Das Reifensystem 1 weist einen Reifen 2 und eine elektromagnetische Sende- und Empfangsvorrichtung 3 auf.

Das Reifensystem 1 ist zur Durchführung eines erfindungsgemäßen Verfahrens geeignet.

Der Reifen 2 ist in Radialschnittansicht dargestellt. Der Reifen 2 ist um eine Rotationsachse 4 in eine Umlaufrichtung 5 rotierbar.

Der Reifen 2 weist einen Anordnungsbereich 6 auf. Die elektromagnetische Sende- und Empfangsvorrichtung 3 ist in dem Anordnungsbereich 6 des Reifens angeordnet.

Der Reifen 2 weist weiter einen Signifikanzpunkt 7 auf. Der Signifikanzpunkt 7 stellt eine Stelle des Reifens 2 dar, an der ein bestimmter Grad einer Gleichförmigkeit eines Reifens 2 vorliegt.

Eine Information über den Signifikanzpunkt 7 an dem Reifen 2, wobei es sich um eine Information über die räumliche Position des Signifikanzpunktes 7 an dem Reifen 2 handelt, ist in einem Speicherelement 8 der elektromagnetischen Sende- und Empfangsvorrichtung 3 gespeichert worden. Diese Information kann alternativ oder zusätzlich in einem Speicherelement 8 einer Datenbank 18 gespeichert werden.

Dargestellt ist auch eine Reifenmittenebene 11 des Reifens 2. Bei der Reifenmittenebene 11 handelt es sich um eine Symmetrieebene des Reifens 2. Die Rotationsachse 4 steht insbesondere senkrecht zur Reifenmittenebene 11.

Der Reifen 2 weist eine von dem Reifen 2 wegweisende Reifenoberfläche 10 auf.

Insbesondere kann mittels einer Auslesevorrichtung 19, wobei die Auslesevorrichtung 19 zu einem Ermitteln eines Sendevermögens der elektromagnetischen Sende- und Empfangsvorrichtung 3 vorgesehen ist, ein Sendevermögens der elektromagnetischen Sende- und Empfangsvorrichtung 3 bestimmt werden. In Abhängigkeit eines charakteristischen Sendevermögens kann eine Position des Anordnungsbereichs 6 bestimmt werden.

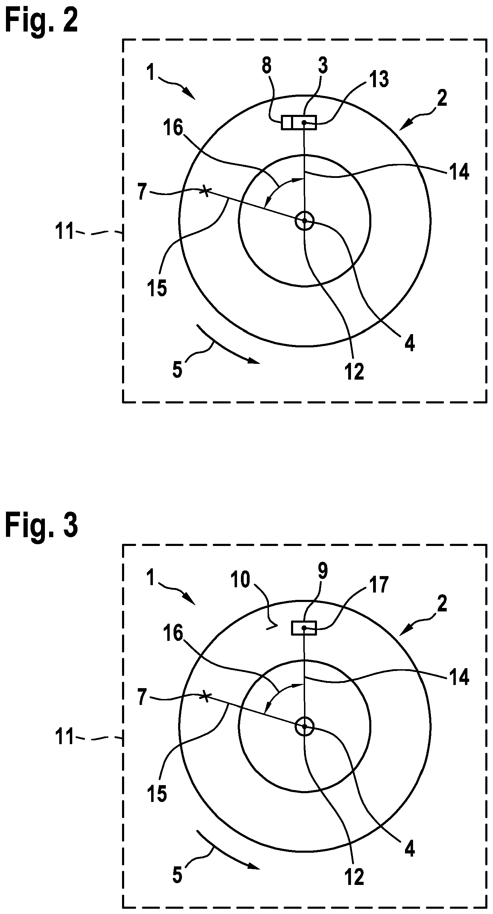

In der Figur 2 ist eine erfindungsgemäßes Reifensystem 1 gemäß einer weiteren Ausführungsform schematisch dargestellt. Die Darstellung zeigt das Reifensystem 1 in einer Ansicht um 90° gedreht zu der Ansicht auf das Reifensystem entsprechend der Darstellung in der Figur 1. Die Komponenten des Reifensystems 1, also insbesondere der Reifen 2, die elektromagnetische Sende- und Empfangsvorrichtung 3 und der Signifikanzpunkt 7, sind gemäß der Darstellung in der Figur 2 auf die Reifenmittenebene 11 projiziert dargestellt. Die Projektionsrichtung ist dabei eine Richtung parallel zu der Rotationsachse 4.

Die Rotationsachse 4 schneidet insbesondere einen geometrischen Mittelpunkt 12 des Reifens 2. Eine erste Verbindungslinie 14 verläuft von einem geometrischen Mittelpunkt 13 der elektromagnetischen Sende- und Empfangsvorrichtung 3 zu dem geometrischen Mittelpunkt 12 des Reifens 2.

Eine zweite Verbindungslinie 15 verläuft von dem Signifikanzpunkt 7 zu dem geometrischen Mittelpunkt 12 des Reifens 2.

Die erste Verbindungslinie 14 und die zweite Verbindungslinie 15 schließen einen Winkel 16 ein.

Der Umstand, ob die erste Verbindungsline 14 in Umlaufrichtung 5 vor der zweiten Verbindungslinie 15 liegt, sowie der Winkel 16 stellen eine Information über die räumliche Position des Signifikanzpunktes 7 an dem Reifen 2 dar. Es handelt sich um eine räumlich auf die Position der elektromagnetischen Sende- und Empfangsvorrichtung 3 bezogene räumliche Position des Signifikanzpunktes 7. Diese Information ist in dem Speicherelement 8 gespeichert.

In der Figur 3 ist eine erfindungsgemäßes Reifensystem 1 gemäß einer weiteren Ausführungsform schematisch dargestellt. Im Unterschied zu der Darstellung in der Figur 2 handelt es sich bei der ersten Verbindungslinie 14 um eine Verbindung eines geometrischen Mittelpunktes 17 eines Informationsbereichs 9 des Reifens 2 zu dem geometrischen Mittelpunkt 12. Bei dem Informationsbereich 9 handelt es sich um einen Bereich, der auf der Reifenoberfläche 10 ausgebildet ist. Dabei kann es sich um eine optisch sichtbare Änderung der Struktur der Reifenoberfläche 10 handeln. Beispielsweise kann es sich bei dem Informationsbereich 9 um den Bereich handeln, in dem die DOT-Nummer des Reifens 2 dargestellt ist.

Der Umstand, ob die erste Verbindungsline 14 in Umlaufrichtung 5 vor der zweiten Verbindungslinie 15 liegt, sowie der Winkel 16 stellen eine Information über die räumliche Position des Signifikanzpunktes 7 an dem Reifen 2 dar. Es handelt sich um eine räumlich auf die Position des Informationsbereichs 9 bezogene räumliche Position des Signifikanzpunktes 7. Diese Information ist in dem Speicherelement 8 gespeichert.

### Bezugszeichenliste

- 1: Reifensystem
- 2: Reifen
- 3: Elektromagentische Sende- und Empfangsvorrichtung
- 4: Rotationsachse
- 5: Umlaufrichtung
- 6: Anordnungsbereich
- 7: Signifikanzpunkt
- 8: Speicherelement
- 9: Informationsbereich
- 10: Reifenoberfläche
- 11: Reifenmittenebene
- 12: Geometrischer Mittelpunkt des Reifens
- 13: Geometrischer Mittelpunkt der elektromagnetischen Sende- und Empfangsvorrichtung
- 14: Erste Verbindungslinie
- 15: Zweite Verbindungslinie
- 16: Winkel der von der ersten und der zweiten Verbindungslinie eingeschlossen wird
- 17: Geometrischer Mittelpunkt eines Informationsbereichs
- 18: Datenbank
- 19: Auslesevorrichtung

## Patentansprüche

1. Verfahren zur Verbesserung eines Reifensystems (1), aufweisend die folgenden Schritte:
- Bereitstellen eines Reifens (2);
- Bereitstellen einer elektromagnetischen Sende- und Empfangsvorrichtung (3);
- Bereitstellen einer Vorrichtung zum Ermitteln eines Grades einer Gleichförmigkeit eines Reifens (2);
- Bestimmen eines Anordnungsbereichs (6) an oder in dem Reifen (2);
- Anordnen der elektromagnetischen Sende- und Empfangsvorrichtung (3) an oder in dem Anordnungsbereich (6) des Reifens (2);
- Ermitteln des Grades der Gleichförmigkeit des Reifens (2);
- Erzeugen einer Information über den Grad der Gleichförmigkeit, **dadurch gekennzeichnet, dass** das Verfahren die folgenden weiteren Schritte aufweist:
- Erzeugen eines Signals, wobei das Signal die Information über den Grad der Gleichförmigkeit trägt;
- Übertragen des Signals an eine Empfängervorrichtung (3, 18) wobei die Empfängervorrichtung (3, 18) ein Speicherelement (8) aufweist, wobei es sich bei der Empfängervorrichtung (3, 18) um die elektromagnetische Sende- und Empfangsvorrichtung (3) handelt;
- Speichern der Information über den Grad der Gleichförmigkeit in dem Speicherelement (8);
- Ermitteln mindestens einer Signifikanzstelle (7) der Gleichförmigkeit des Reifens (2) anhand des Grades der Gleichförmigkeit;
- Erfassen einer räumlichen Position der mindestens einen Signifikanzstelle (7) an oder in dem Reifen (2);
- Speichern einer Information über die räumliche Position der mindestens einen Signifikanzstelle (7) in dem Speicherelement (8).

2. Verfahren nach Anspruch 1, **dadurch gekennzeichnet, dass** eine Reifenidentifikationsinformation in dem Speicherelement (8) der Empfängervorrichtung (3, 18) gespeichert wird, wobei andere in dem Speicherelement (8) gespeicherte Informationen anhand der Reifenidentifikationsinformation dem Reifen (2) eineindeutig zugeordnet werden können.

3. Verfahren nach dem vorhergehenden Anspruch, **dadurch gekennzeichnet, dass** die Reifenidentifikationsinformation in dem Speicherelement (8) der elektromagnetischen Sende- und Empfangsvorrichtung (3) mit der Information über die Gleichförmigkeit verknüpft gespeichert wird.

4. Verfahren nach dem vorhergehenden Anspruch, **dadurch gekennzeichnet, dass** es sich bei der räumlichen Information über die Signifikanzstelle (7) um eine räumlich auf den Anordnungsbereich (6) der elektromagnetischen Sende- und Empfangsvorrichtung (3) bezogene Position handelt.

5. Verfahren nach Anspruch 4, **dadurch gekennzeichnet, dass** es sich bei der räumlichen Information über die Signifikanzstelle (7) um eine räumlich auf einen Informationsbereich (9) an dem Reifen (2) bezogene Position handelt.

6. Verfahren nach einem der vorhergehenden Ansprüche, **dadurch gekennzeichnet, dass** zu einem Bestimmen des Anordnungsbereichs (6) folgende Schritte durchgeführt werden:
- Bereitstellen einer Auslesevorrichtung (19), wobei die Auslesevorrichtung (19) zu einem Ermitteln eines Sendevermögens der elektromagnetischen Sende- und Empfangsvorrichtung (3) vorgesehen ist;
- Ermitteln eines Sendevermögens der elektromagnetischen Sende- und Empfangsvorrichtung (3) mittels Auslesevorrichtung (19);
- Bestimmen des Anordnungsbereichs (6) in Abhängigkeit eines charakteristischen Sendevermögens.

7. Reifensystem (1), aufweisend einen Reifen (2) und eine elektromagnetische Sende- und Empfangsvorrichtung (3) und insbesondere eine Datenbank (18), **dadurch gekennzeichnet, dass** das Reifensystem (1) zur Durchführung eines Verfahrens gemäß einem der vorhergehenden Ansprüche vorgesehen ist.

## Claims

1. Method for improving a tyre system (1), comprising the following steps:
- providing a tyre (2);
- providing an electromagnetic transmitting and receiving apparatus (3);
- providing an apparatus for determining a degree of uniformity of a tyre (2);
- determining an arrangement region (6) on or in the tyre (2);
- arranging the electromagnetic transmitting and receiving apparatus (3) on or in the arrangement region (6) of the tyre (2);
- determining the degree of uniformity of the tyre (2);
- generating information about the degree of uniformity, **characterized in that** the method comprises the following further steps:
- generating a signal, wherein the signal carries the information about the degree of uniformity;
- transmitting the signal to a receiver apparatus (3, 18), wherein the receiver apparatus (3, 18) has a memory element (8), wherein the receiver apparatus (3, 18) is the electromagnetic transmitting and receiving apparatus (3);
- storing the information about the degree of uniformity in the memory element (8);
- determining at least one point of significance (7) of the uniformity of the tyre (2) on the basis of the degree of uniformity;
- detecting a spatial position of the at least one point of significance (7) on or in the tyre (2);
- storing information about the spatial position of the at least one point of significance (7) in the memory element (8).

2. Method according to Claim 1, **characterized in that** tyre identification information is stored in the memory element (8) of the receiver apparatus (3, 18), wherein other information stored in the memory element (8) can be uniquely assigned to the tyre (2) by means of the tyre identification information.

3. Method according to the preceding claim, **characterized in that** the tyre identification information is stored in the memory element (8) of the electromagnetic transmitting and receiving apparatus (3) in a manner linked to the information about the uniformity.

4. Method according to the preceding claim, **characterized in that** the spatial information about the point of significance (7) is a position spatially related to the arrangement region (6) of the electromagnetic transmitting and receiving apparatus (3).

5. Method according to Claim 4, **characterized in that** the spatial information about the point of significance (7) is a position spatially related to an information region (9) on the tyre (2).

6. Method according to one of the preceding claims, **characterized in that** the following steps are carried out in order to determine the arrangement region (6):
- providing a readout apparatus (19), wherein the readout apparatus (19) is provided for determining a transmitting capacity of the electromagnetic transmitting and receiving apparatus (3);
- determining a transmitting capacity of the electromagnetic transmitting and receiving apparatus (3) by means of the readout apparatus (19);
- determining the arrangement region (6) on the basis of a characteristic transmitting capacity.

7. Tyre system (1), comprising a tyre (2) and an electromagnetic transmitting and receiving apparatus (3) and in particular a database (18), **characterized in that** the tyre system (1) is provided for carrying out a method according to one of the preceding claims.

## Revendications

1. Procédé pour améliorer un système de pneumatique (1), comprenant les étapes suivantes :
- se mettre un pneumatique (2) à disposition ;
- se mettre à disposition un dispositif électromagnétique (3) d'émission et de réception ;
- se mettre à disposition un dispositif permettant de déterminer le degré d'uniformité d'un pneumatique (2) ;
- déterminer une zone de disposition (6) sur ou dans le pneumatique (2) ;
- agencer le dispositif électromagnétique (3) d'émission et de réception sur ou dans la zone d'agencement (6) du pneumatique (2) ;
- déterminer le degré de l'uniformité du pneumatique (2) ;
- générer une information sur le degré de l'uniformité, **caractérisé en ce que** le procédé comprend les étapes supplémentaires suivantes :
- générer un signal, lequel signal contient l'information sur le degré de l'uniformité ;
- transmettre le signal à un dispositif récepteur (3, 18), lequel dispositif récepteur (3, 18) comprend un élément de mémoire (8), le dispositif récepteur (3, 18) étant le dispositif électromagnétique (3) d'émission et de réception ;
- mémoriser l'information sur le degré de l'uniformité dans l'élément de mémoire (8) ;
- déterminer au moins un point significatif (7) de l'uniformité du pneumatique (2) au moyen du degré de l'uniformité ;
- détecter une position spatiale dudit au moins un point significatif (7) sur ou dans le pneumatique (2) ;
- mémoriser une information sur la position spatiale dudit au moins un point significatif (7) dans l'élément de mémoire (8).

2. Procédé selon la revendication 1, **caractérisé en ce qu'**une information d'identification du pneumatique est mémorisée dans l'élément de mémoire (8) du dispositif récepteur (3, 18), d'autres informations mémorisées dans l'élément de mémoire (8) étant aptes à être attribuées de manière univoque au pneumatique (2) sur la base de l'information d'identification du pneumatique.

3. Procédé selon la revendication précédente, **caractérisé en ce que** l'information d'identification du pneumatique est mémorisée dans l'élément de mémoire (8) du dispositif électromagnétique (3) d'émission et de réception en étant associée à l'information sur l'uniformité.

4. Procédé selon la revendication précédente, **caractérisé en ce que** l'information spatiale sur le point significatif (7) est une position se rapportant spatialement à la zone de disposition (6) du dispositif électromagnétique (3) d'émission et de réception.

5. Procédé selon la revendication 4, **caractérisé en ce que** l'information spatiale relative au point significatif (7) est une position se rapportant spatialement à une zone d'information (9) sur le pneumatique (2).

6. Procédé selon l'une des revendications précédentes, **caractérisé en ce que** les étapes suivantes sont mises en œuvre pour déterminer la zone de disposition (6) :
- se mettre à disposition un dispositif de lecture (19), le dispositif de lecture (19) étant prévu pour déterminer une capacité d'émission du dispositif électromagnétique (3) d'émission et de réception ;
- déterminer une capacité d'émission du dispositif électromagnétique (3) d'émission et de réception au moyen du dispositif de lecture (19) ;
- déterminer la zone de disposition (6) en fonction d'une capacité d'émission caractéristique.

7. Système de pneumatique (1) comprenant un pneumatique (2) et un dispositif électromagnétique (3) d'émission et de réception et en particulier une base de données (18), **caractérisé en ce que** le système de pneumatique (1) est prévu pour mettre en œuvre un procédé selon l'une des revendications précédentes.
